**Europäisches Patentamt**

**European Patent Office**

**Office européen des brevets**

(19)

(11) Veröffentlichungsnummer: **0 239 948**
**B1**

(12) # EUROPÄISCHE PATENTSCHRIFT

(45) Veröffentlichungstag der Patentschrift:
**11.10.89**

(21) Anmeldenummer: **87104569.6**

(22) Anmeldetag: **27.03.87**

(51) Int. Cl.⁴: **B25J 15/08, B25J 15/00**

(54) **Vorrichtung zum Aufnehmen flexibler und/oder poröser und/oder klebriger Flächengebilde oder Formkörper.**

(30) Priorität: **03.04.86 DE 3611101**

(43) Veröffentlichungstag der Anmeldung:
**07.10.87 Patentblatt 87/41**

(45) Bekanntmachung des Hinweises auf die Patenterteilung:
**11.10.89 Patentblatt 89/41**

(84) Benannte Vertragsstaaten:
**BE CH DE ES FR GB IT LI NL SE**

(56) Entgegenhaltungen:
**AU-B- 457 313**
**FR-A- 2 559 468**

(73) Patentinhaber: **BASF Aktiengesellschaft,
Carl-Bosch-Strasse 38, D-6700 Ludwigshafen(DE)**

(72) Erfinder: **Gehrig, Heinz, Dr., Spinozastrasse 30,
D-6750 Kaiserslautern(DE)**

**Beschreibung**

Die Erfindung betrifft eine Vorrichtung nach dem Oberbegriff des Anspruchs 1.

Vorrichtungen zum Aufnehmen von Stückgut aller Art und anschließendem Positionieren dieser Güter sind bekannt. Darunter sind auch solche, bei denen mit Nadeln versehene Greifelemente flexible Flächengebilde von einer Unterlage greifen und nach dem Abheben, Transportieren und Positionieren wieder freigeben. Die Greifelemente sind dabei in Transportrahmen befestigt und werden mit diesen bewegt. Ihre Nadeln sind gerade ausgeführt und unter einem Winkel zum aufzunehmenden Flächengebilde angeordnet, so daß dieses zum Greifen durch eine geradlinige, axiale Bewegung durchstochen wird. Häufig sind die Nadeln auch gegeneinander verschränkt, d.h. abwechselnd nach links und rechts geneigt, um während des Transports einen besseren Halt der Flächengebilde zu erreichen.

Diese Vorrichtungen befriedigen jedoch nicht in jeder Hinsicht, sei es, daß beim Aufnehmen oder Ablegen Faltenbildungen bei flexiblen Flächengebilden bzw. Verschiebungen bei Formkörpern entstehen, sei es, daß zusätzliche Abstreifer erforderlich sind oder sei es, daß der Erfolg des Greifens wesentlich von der Konstruktion der Unterlage, auf der die aufzunehmenden Güter gestapelt sind, abhängig ist. Darüber hinaus kann beim Einsatz dieser Vorrichtungen auf aufwendige manuelle Arbeit nicht verzichtet werden.

In der Fertigungstechnik werden zunehmend Roboter eingesetzt, die Handlangungen, die bisher von Menschen durchgeführt werden, übernehmen. Diese Roboter können mit ihren Auslegern die vielfältigsten Bewegungen durchführen.

Der Erfindung liegt nun die Aufgabe zugrunde, eine Vorrichtung zu schaffen, die in Zusammenarbeit mit dem Ausleger eines Roboters das Aufnehmen von Flächengebilden oder Formkörpern automatisch durchführt, wobei gleichzeitig die den Greifvorgang unmittelbar beeinflussenden Greifelemente auf unterschiedlichste Materialeigenschaften der Flächengebilde bzw. Formkörper einstellbar sind.

Zur Lösung dieser Aufgabe werden die Maßnahmen nach dem Kennzeichen des Anspruchs 1 vorgeschlagen.

Mit der erfindungsgemäßen Vorrichtung können Flächengebilde und Formkörper der unterschiedlichsten Art sowohl von einem Stapel als auch von einer ebenen Unterlage besonders feinfühlig abgenommen werden. Es lassen sich sehr dünne flexible Flächengebilde, z.B. Matten, Vliese, Filze oder Gewebe, ebenso wie poröse Hart- und Weichschaumteile und noch warmplastische Formkörper bzw. Halbzeuge aus faserverstärkten Kunststoffen, sogenannte sheet-moulding-compounds (SMC) oder Glasmatten-verstärkte-Thermoplaste (GMT) erfassen. Durch ihre besondere Ausgestaltung und Anordnung auf den Greifelementen dringen bei einem Greifvorgang immer sämtliche Nadeln gleichzeitig in das Flächengebilde bzw. den Formkörper ein. Die Einstichtiefe kann dabei an die Dicke der aufzunehmenden Teile angepaßt werden. Dies geschieht durch eine entsprechend große oder kleine Drehbewegung der Greifelemente. Die Vorrichtung zeichnet sich zudem durch große Einfachheit aus und ist deshalb außerordentlich unempfindlich gegen Störungen. Hervorzuheben sind auch die geringen Abmessungen der Vorrichtung. Im einfachsten Fall genügt es, zwei Greifelemente auf einem Träger anzubringen. Es können aber auch, je nach Größe der Flächengebilde oder Formkörper, vier oder mehr Greifelemente vorgesehen werden. Jedes Greifelement besitzt mehrere, vorzugsweise 3 bis 5 Nadeln, wobei die Nadeln kreisbogenförmig ausgebildet und in Form eines mehrgängigen Gewindes ausgerichtet sind, d.h. die Nadeln bilden insgesamt ein Kreisring (Nadelkrone) aus und schließen jeweils mit der Oberfläche des Greifelements einen gleich großen Winkel ein (Steigungswinkel der Gewindegänge). Auch dicke Materialien können problemlos aufgenommen und gestapelt werden.

Nach einem weiteren Merkmal der Erfindung ist in der Drehachse der Nadeln ein Zentrierstift auf dem Greifelement angeordnet. Hierdurch ist eine zusätzliche Positioniersicherheit beim Aufsetzen der Greifeinrichtung auf einem Flächengebilde oder Formkörper gegeben. Während der Drehbewegung des Greifelements wird das Flächengebilde bzw. der Formkörper mehr oder weniger tief in den Zentrierstift hineingezogen.

In vorteilhafter Weise kann die Vorrichtung so ausgestaltet sein, wie in den Ansprüchen 3 bis 5 angegeben. Insbesondere wenn die Ausbildung so erfolgt, wie in den Ansprüchen 3 und 4 angegeben, ist ein sehr rasches Aufnehmen und Ablegen der Flächengebilde oder Formkörper sichergestellt. Die Drehbewegung der Greifelemente kann mechanisch, hydraulisch, pneumatisch oder elektrisch erzeugt werden, und es kann jedes Greifelement für sich oder sämtliche Greifelemente können gemeinsam angetrieben werden. Zur Kraftübertragung eignen sich die üblichen Maschinenelemente, beispielsweise Gestänge, Hebel, Zahnräder oder Zahnriemen. Die Drehbewegung kann durch Anschläge oder Drehpositionsgeber, z.B. numerische Schrittgeber eingestellt werden. Vorzugsweise sind jeweils gegenüberliegende Greifelemente im entgegengesetzten Sinne drehend antreibbar. Auf diese Weise lassen sich nach außen wirkende Kräfte bzw. Momente ausgleichen. Dies wiederum bewirkt, daß die Flächengebilde oder Formkörper beim Eindringen und Herausdrehen der Nadeln nicht verschoben werden.

Im folgenden wird die Erfindung unter Hinweis auf die Zeichnungen anhand eines Ausführungsbeispiels näher erläutert.

Es zeigt:

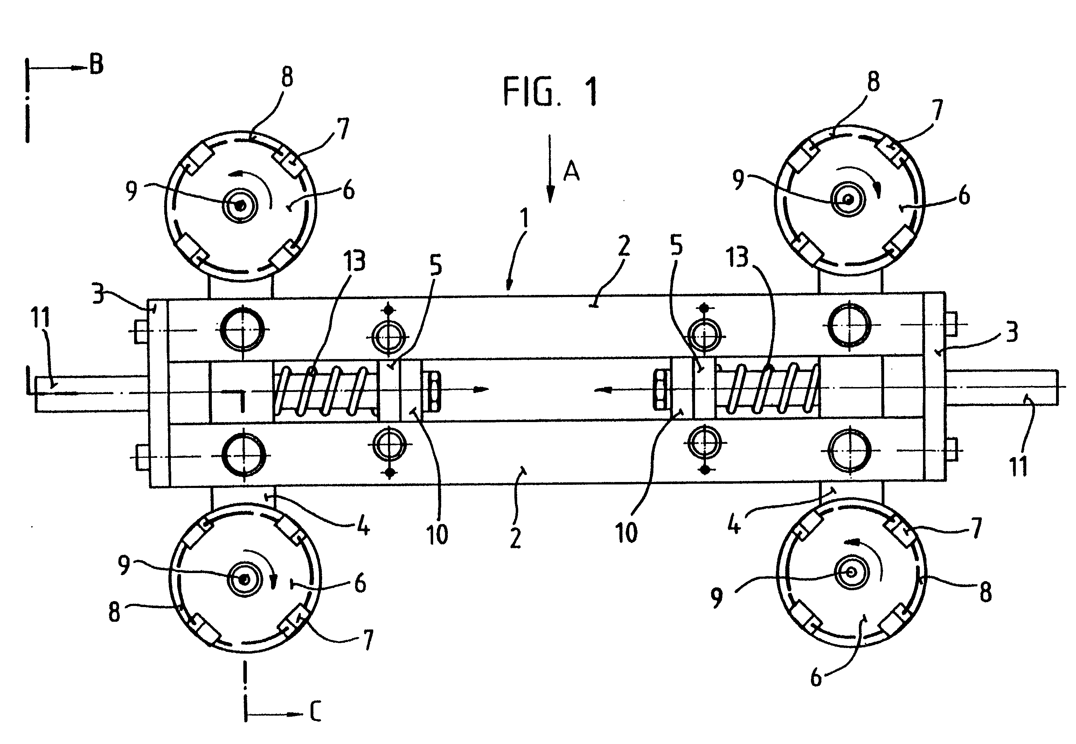

Figur 1 eine schematische Unteransicht einer Greifeinrichtung,

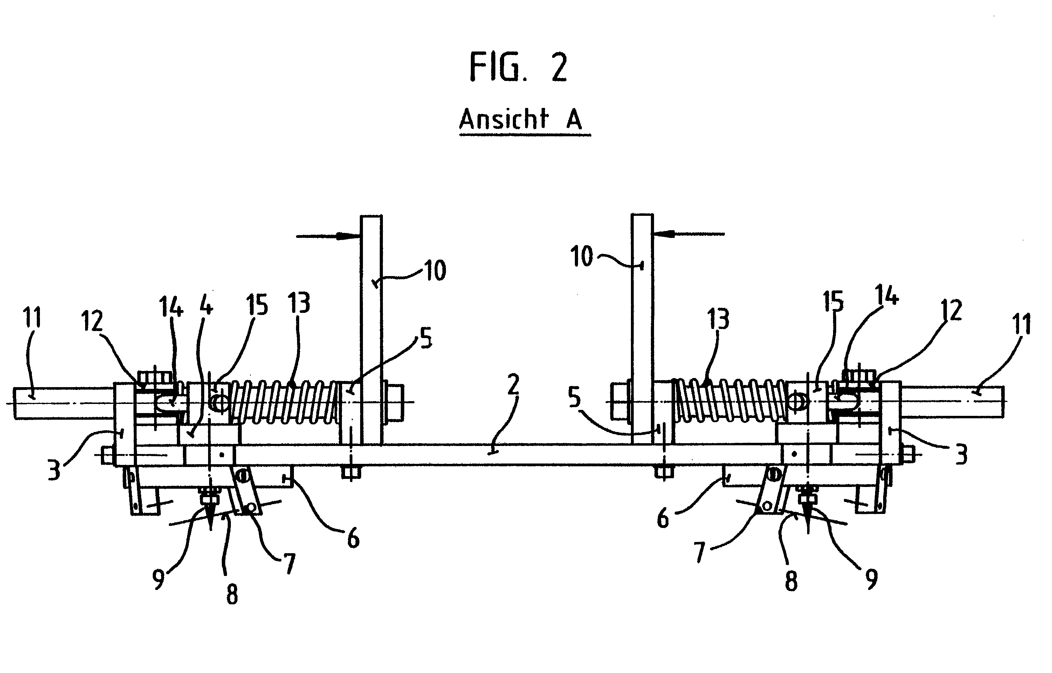

Figur 2 eine der Figur 1 entsprechende Seitenansicht in Richtung des Pfeiles "A" und

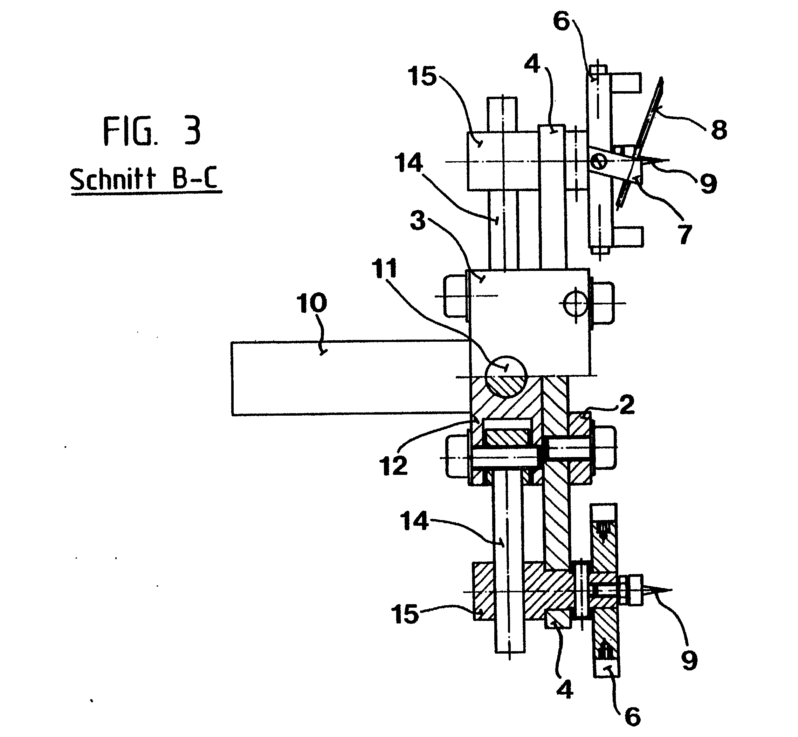

Figur 3 eine Ansicht der Greifeinrichtung, teilweise geschnitten, Schnitt B-C gemäß Figur 1.

Im wesentlichen besteht die Greifeinrichtung aus einer aus den Profilen (2, 3, 4, 5) gebildeten Rahmenkonstruktion (1) und vier auf den Profilen (4) in einer Ebene jeweils paarweise einander gegenüberliegenden Greifelementen (6). Die Greifelemente sind scheibenförmig ausgeführt und tragen jeweils vier in Halterungen (7) befestigte Nadeln (8). Diese sind kreisbogenförmig ausgebildet und zueinander in Form eines mehrgängigen Gewindes ausgerichtet, d.h. die Nadeln eines Greifelements sind zumindest näherungsweise entlang einer Kreislinie angebracht und schließen mit der Oberfläche des Greifelements einen Winkel ein. Auf diese Weise entsteht für jedes Greifelement eine sogenannte Nadelkrone. Im Zentrum der Drehachse der Nadeln bzw. der Nadelkrone ist ein Zentrierstift (9) angebracht.

Die Rahmenkonstruktion (1) ist am Ende eines bewegbaren Auslegers, der Teil eines herkömmlichen Roboters ist, befestigt. An diesem Ausleger ist eine durch eine hydraulische oder pneumatische Kolben- und Zylindereinheit betätigbare Zange vorgesehen, deren Backen auf die Profile (10) der Greifeinrichtung wirken. Roboter, Ausleger und die Zange sind in den Zeichnungen nicht dargestellt.

In der Ausgangsstellung der Greifeinrichtung liegen die Profile (10) an den als Anschläge wirkenden Profilen (5) der Rahmenkonstruktion an. Hierzu sind die Profile (10) jeweils mit einer Schubstange (11) verbunden, die durch die Profile 3 und 5 geführt sowie mit einem Gabelkopf (12) verbunden ist. Zwischen dem mit der Schubstange fest verbundenen Gabelkopf und dem Profil (5) ist eine auf der Schubstange (11) aufgeschobene Schraubenfeder (13) eingesetzt, welche durch die Greifbewegung der Zange des Roboter-Auslegers gespannt wird. Die Bewegungs- und Kraftübertragung zwischen Gabelkopf (12) und den Greifelementen (6) erfolgt durch an den Gabelköpfen angelenkte und in diesen schwenkbar gelagerte Kipphebel (14), deren freie Enden mit jeweils einer Achse (15), auf der ein Greifelement befestigt ist, in Verbindung stehen. Um eine Relativbewegung während des Greifvorgangs ausgleichen zu können, sind die Kipphebel (14) in den Achsen (15) verschiebbar gelagert.

Zum Aufnehmen von Flächengebilden oder Formkörpern wird die Greifeinrichtung mit Hilfe des Roboter-Auslegers auf dieselben aufgesetzt, wobei die eindringenden Zentrierstifte (9) das betreffende Teil in seiner Lage fixieren. Durch die Zangenbewegung werden die Profile (10) gegen die Wirkung der sich zwischen den Profilen (5) und den Gabelköpfen (12) abstützenden Schraubenfedern (13) verschoben. Gleichzeitig verschieben sich die Gabelköpfe, und die translatorische Bewegung dieser Teile wird mittels der schwenkbar und verschiebbar gelagerten Kipphebel (14) in eine Drehbewegung für die Greifelemente (6) umgesetzt. Hierdurch bedingt dringen die Nadeln (8) in das Flächengebilde bzw. den Formkörper ein. Der Drehsinn der Greifelemente bzw. der Nadeln ist angedeutet. Für die Beendigung eines Greifvorgangs, d.h. für das Ablegen der Flächengebilde oder Formkörper werden nach entsprechender Zangenbewegung die Profile (10) durch die Schraubenfedern (13) in ihre Ausgangslage verschoben und die Nadeln (8) geben infolge der dabei ausgelösten entgegengesetzten Drehbewegung der Greifelemente (6) das Flächengebilde bzw.

den Formkörper wieder frei. Besondere Einrichtungen, beispielsweise Abstreifer, sind für das Ablegen der Flächengebilde oder Formkörper auch dann nicht erforderlich, wenn diese an der Oberfläche klebrig sind oder nicht ebene Flächen aufweisen. Ebenso ist es nicht erforderlich, speziell ausgebildete Unterlagen für die Aufnahme der zu greifenden Teile zu haben.

## Patentansprüche

1. Vorrichtung zum Aufnehmen flexibler und/oder poröser und/oder klebriger Flächengebilde oder Formkörper mit einer am Ende eines bewegbaren Roboter-Auslegers befestigten Greifeinrichtung, die durch wenigstens zwei auf einer Rahmenkonstruktion in einer Ebene einander gegenüberliegende und Nadeln tragende Greifelemente gebildet ist, dadurch gekennzeichnet, daß die auf den Greifelementen (6) angebrachten Nadeln (8) kreisbogenförmig ausgebildet und die Nadeln eines Greifelements zueinander in Form eines mehrgängigen Gewindes ausgerichtet sind und daß die Greifelemente drehbar sind, wodurch die Nadeln schraubenförmig in das Flächengebilde bzw. den Formkörper hinein- und aus diesem herausbewegbar sind.

2. Vorrichtung nach Anspruch 1, dadurch gekennzeichnet, daß in der Drehachse der Nadeln (8) ein Zentrierstift (9) auf dem Greifelement (6) angeordnet ist.

3. Vorrichtung nach Anspruch 1, dadurch gekennzeichnet, daß die Drehbewegung der Greifelemente (6) mechanisch, hydraulisch, pneumatisch oder elektrisch erzeugt wird.

4. Vorrichtung nach Anspruch 3, dadurch gekennzeichnet, daß die Drehbewegung der Greifelemente (6) einstellbar ist.

5. Vorrichtung nach einem oder mehreren der vorstehenden Ansprüche, dadurch gekennzeichnet, daß jeweils gegenüberliegende Greifelemente (6) im entgegengesetzten Sinne drehend antreibbar sind.

## Claims

1. Apparatus for picking up a flexible, porous or tacky sheetlike or molded structure, comprising a gripper means which is attached at the end of a mobile robot arm and which is formed by at least two needle-carrying gripper elements arranged opposite one another in a plane within a frame structure, wherein the needles (8) mounted on the gripper elements (6) are constructed in the shape of an arc, the needles of a gripper element being oriented toward one another in the form of a multiple thread, and the gripper elements are rotatable, as a result of which the needles are helically movable into and out of the sheetlike or molded structure.

2. Apparatus as claimed in claim 1, wherein, in the axis of rotation of the needles (8), a centering pin (9) is arranged on the gripper element (6).

3. Apparatus as claimed in claim 1, wherein the rotational movement of the gripper elements (6) is produced mechanically, hydraulically, pneumatically or electrically.

4. Apparatus as claimed in claim 3, wherein the rotational movement of the gripper elements (6) is adjustable.

5. Apparatus as claimed in one or more of the preceding claims, wherein mutually opposite gripper elements (6) are drivable contrarotatingly.

**Revendications**

1. Dispositif pour recevoir des produits plats ou des corps moulés, flexibles et/ou poreux et/ou collants, comportant, fixé à l'extrémité d'un bras de robot, un moyen de prise qui est formé par au moins deux éléments de prise se faisant face dans un plan sur une construction en bâti, et portant des aiguilles, caractérisé par le fait que les aiguilles (8), montées sur les éléments de prise (6), sont en forme d'arc de cercle et les aiguilles d'un élément de prise sont ajustées les unes aux autres en forme de filetage à filet multiple et que les éléments de prise sont montés tournants, grâce à quoi les aiguilles peuvent, en forme de vis, pénétrer dans le, et sortir du, produit plat ou corps moulé.

2. Dispositif selon la revendication 1, caractérisé par le fait que dans l'axe de rotation des aiguilles (8), une cheville de centrage (9) est prévue sur l'élément de prise (6).

3. Dispositif selon la revendication 1, caractérisé par le fait que le mouvement de rotation des éléments de prise (6) est produit mécaniquement, hydrauliquement, pneumatiquement ou électriquement.

4. Dispositif selon la revendication 3, caractérisé par le fait que le mouvement de rotation des éléments de prise (6) est réglable.

5. Dispositif selon l'une des revendications précédentes, caractérisé par le fait que les éléments de prise (6) qui se font face sont entraînables respectivement en rotations de sens opposés.

# FIG. 1

# FIG. 2

## Ansicht A

EP 0 239 948 B1

FIG. 3
Schnitt B-C

EP 0 239 948 B1